# EUROPÄISCHE PATENTANMELDUNG

(11) **EP 4 187 148 A1**
(43) Veröffentlichungstag der Anmeldung: **31.05.2023**
(21) Anmeldenummer: 22209816.2
(22) Anmeldetag: 28.11.2022
(51) Int. Cl.: F21V 8/00, B32B 3/06, B32B 3/30, B32B 7/12, B32B 25/08, B32B 25/20, B32B 27/32, B60Q 3/14, B60Q 3/283, B60Q 3/64, B60R 13/00, B32B 3/26

(54) **VORRICHTUNG ALS BELEUCHTBARES ANZEIGEELEMENT**

(30) Priorität: 29.11.2021 DE 102021005901
(71) Anmelder: Silcos GmbH, 72770 Reutlingen (DE)
(72) Erfinder: Fuchs, Manfred, 72649 Wolfschlugen (DE)
(74) Vertreter: Habermann, Hruschka & Schnabel

(57) **Zusammenfassung**

Die vorliegende Erfindung betriff eine Vorrichtung zur Anordnung an einem Trägerelement, vorzugsweise auf einer Airbagkappe, bestehend aus einem flexiblen Gehäuse und einem in dem Gehäuse integrierten flexiblen Lichtleiter (3), wobei das Gehäuse in der Lage ist, mit dem Trägerelement einen Stoffschluss einzugehen. Das Gehäuse weist eine Silikonabdeckung, eine Trägerplatte, die aus dem gelichen Material wie das Trägerelement hergestellt ist, und einen Rahmen aus einem flexiblen Material auf. Des Weiteren betrifft die Erfindung entsprechende Herstellungsverfahren.

## Beschreibung

Die Erfindung betrifft eine als beleuchtbares Anzeigeelement ausgestaltete Vorrichtung zur Anbringung an einem Trägerelement, insbesondere für den Fahrzeuginnenbereich.

Beleuchtbare Anzeigeelemente im Fahrzeuginnenbereich sind in den unterschiedlichsten Ausgestaltungen bekannt. So sind Tastelemente oder auch Dekorelemente oft mit einer Hintergrundbeleuchtung versehen. Auch sind flächige, flexible Silikonkörper bekannt, die für eine homogene Auskopplung von Licht, das in diesen in der Regel über LEDs eingeleitet wird, ausgelegt sind und insbesondere im Dekorbereich Anwendung finden.

Mittlerweile ist jedes Fahrzeug zumindest im Cockpit- und Beifahrerbereich mit teilweise mehreren Airbags ausgestattet. Eine der wichtigsten Sicherheitseinrichtungen im Fahrzeug stellt dabei die im Lenkrad integrierte Airbagvorrichtung dar. Im Lenkrad befindet sich hierzu in der Regel mittig eine Airbagkappe, die regelmäßig mit dem Emblem des entsprechenden Herstellers versehen ist. Die bisher als separate Bauteile konzipierten Embleme werden auf diesen Kappen heißverstemmt oder mit diesen verschweißt; ein kostengünstigeres Verkleben konnte sich in diesem Zusammenhang bisher nicht durchsetzen.

Da aus Sicherheitsgründen die auf den Airbagkappen befindlichen Dekorelemente und diese Kappen selbst bei Auslösung des Airbags nicht splittern dürfen, wurden bisher Beleuchtungselemente, wie sie sonst bei den Tastern im Fahrzeug gebräuchlich sind, nicht in Betracht gezogen. Hinzu kommt, dass derartige Beleuchtungselemente, aufgrund der bisher in diesem Bereich zur Verwendung kommenden Materialien, bei einer Anordnung auf Airbagkappen Gefahr laufen würden, sich bei tiefen Temperaturen zu starr zu verhalten, was einer fehlerfreien und verzögerungsarmen Auslösung des Airbags entgegenstehen würde. Des Weiteren durften bisher elektronische Bauteile, wie Taster oder auch andere Anzeigeelemente, im Bereich der Airbagkappen nicht verwendet werden.

Aus der DE 10 2018 111 072 A oder der DE 10 2017 124 907 A1 ist beispielsweise eine Vorrichtung zur Anordnung an einem Trägerelement nach dem Oberbegriff des Anspruchs 1 bekannt. Anordnungen mit Lichtleitern, bei denen unter Ausbildung eines Stoffschlusses zwischen diesen eine Trägerplatte aus einem gleichen Material wie ein Trägerelement hergestellt ist, zeigen beispielsweise die DE 10 2013 001 934 A1 oder die DE 10 2015 206 602 A1.

Ausgehend davon stellt sich die vorliegende Erfindung die Aufgabe, eine Vorrichtung zu schaffen, die den Einsatz von beleuchtbaren Anzeigeelementen, wie insbesondere den Emblemen der Hersteller, auf einem Trägerelement, wie beispielsweise einer Airbagkappe, ohne Sicherheitsrisiken ermöglicht, insbesondere die Funktionssicherheit eines Airbags in diesem Bereich in keiner Weise gefährdet.

Gelöst wird diese Aufgabe mit einer Vorrichtung mit den Merkmalen des Anspruchs 1 und mit einem entsprechenden Herstellungsverfahren mit den Merkmalen nach Anspruch 13. Des Weiteren bezieht sich die, die Aufgabe lösende Erfindung auch auf die Verwendung einer solchen Vorrichtung als ein beleuchtbares Anzeigeelement für eine Airbagkappe.

In einem ersten Aspekt betrifft die Erfindung folglich eine Vorrichtung zur Anordnung an einem Trägerelement, bestehend aus einem flexiblen Gehäuse und einem in dem Gehäuse integrierten flexiblen Lichtleiter,
wobei das Gehäuse eine Silikonabdeckung und eine Trägerplatte aufweist,
wobei der Lichtleiter durch die Silikonabdeckung und die Trägerplatte vollständig eingefasst ist,
und wobei die Trägerplatte aus dem gleichen Material wie das Trägerelement hergestellt ist, wobei das Material ausgelegt ist, um zwischen dem Trägerelement und der Trägerplatte einen Stoffschluss auszubilden.

Die Verwendung von durchweg flexiblen Materialien bei den einzelnen Komponenten schließt ein Splittern bei zwangsläufiger Zerstörung der Vorrichtung aus, weshalb sich die Vorrichtung insbesondere als beleuchtbares Anzeigeelement auf einer Airbagkappe eignet.

Darüber hinaus beinhaltet die Vorrichtung keine weiteren elektronischen Bauteile. Der Lichtleiter selbst wird in einer besonderen Ausführungsform von zumindest einer hierzu extern angeordneten Lichtquelle, wie vorzugsweise zumindest einer LED, mit Licht versorgt.

Die erfindungsgemäße Lösung liegt insbesondere darin, dass die Trägerplatte mit dem Trägerelement, wie beispielsweise einer Airbagkappe, aufgrund des gleichen Materials einen Stoffschluss eingehen kann.

Airbagkappen werden in der Regel aus thermoplastischen PolyOlefinen (TPO) oder thermoplastischen Elastomeren (TPE) hergestellt, weshalb die Trägerplatte gemäß der Erfindung ebenfalls aus TPO oder TPE hergestellt sein kann.

Dies ermöglicht es daher gemäß der Erfindung, dass die Trägerplatte mit dem Trägerelement verschweißt oder verklebt werden kann, was eine einfache Montage realisiert. Die Vorrichtung lässt sich dabei insbesondere als eine vormontierte Einheit handhaben.

Grundsätzlich kann die so ausgebildete Vorrichtung neben Airbagkappen auch auf sonstigen, aus TPO oder TPE bestehenden weichen Untergründen für das Trägerelement verliersicher angebracht werden.

In einer Ausführungsform kann die Trägerplatte integral eine Vielzahl von abragenden Verbindungselementen, wie Zapfen, Rastelementen oder dergleichen aufweisen, die ausgebildet sind, mit dem Trägerelement, ggfs. zusätzlich zu einer ausbildbaren stoffschlüssigen Verbindung, einen Form- und/oder Kraftschluss einzugehen.

Gemäß der Erfindung weist das Gehäuse einen seitlichen Rahmen auf, der in sich umfänglich geschlossen und ebenfalls aus einem flexiblen Material hergestellt ist. Gemäß der Erfindung geht der Rahmen mit der Silikonabdeckung unter Ausbildung eines entsprechenden Verbundteils eine 2-Komponentenverbindung ein.

Dabei ist es gemäß der Erfindung des Weiteren vorgesehen, dass der Rahmen aus dem gleichen Material wie die Trägerplatte hergestellt ist, um so zwischen dem Rahmen des 2-Komponentenbauteils und der Trägerplatte einen Stoffschluss zu ermöglichen.

Vorzugsweise besteht daher der Rahmen ebenfalls aus einem entsprechenden TPO oder TPE wie die Trägerplatte, so dass der Rahmen mit dieser an den vorgesehenen Kontaktflächen verschweißt, heißverstemmt oder verklebt werden kann.

Der Lichtleiter ist als ein flächiger, flacher Silikonkörper ausgebildet, der aus einem hochtransparenten Silikon hergestellt ist, wodurch eine optimale Lichtleitung realisiert wird. Der Lichtleiter lässt sich daher unbegrenzt in seiner Geometrie an die notwendigen Dimensionen der Vorrichtung anpassen und bildet zusammen mit der Silikonabdeckung und der Trägerplatte ein flexibles, splitterfreies Gehäuse, welches insgesamt ein sehr geringes Gewicht besitzt.

Innerhalb des Gehäuses liegt der Lichtleiter zwischen der Silikonabdeckung und der Trägerplatte vollständig lose ein, d.h. zwischen diesen Komponenten existiert jeweils ein kleiner Luftspalt ohne irgendeine stoffschlüssige Verbindung. Der flächige Lichtleiter ist dabei zwischen der Silikonabdeckung und der Trägerplatte vollständig staub- und wasserdicht aufgenommen.

Um eine bessere Lichtauskopplung aus der Vorrichtung nach oben durch die Silikonabdeckung zu verwirklichen, kann die zu dem flächigen Lichtleiter zugewandte Oberfläche der Trägerplatte mit einer reflektierenden Beschichtung, wie beispielsweise einer weißen Lackierung, versehen sein.

In einer bevorzugten Ausführungsform der Vorrichtung gemäß der Erfindung ist der flächige Lichtleiter integral mit einem Anschlussleiter aus einem hochtransparenten Flüssigsilikon hergestellt.

Vorzugsweise ist der Anschlussleiter im Verhältnis zum Lichtleiter dezentral angeordnet, idealerweise lateral zu diesem, um so auch dezentral durch die Trägerplatte nach außen bzw. unten geführt werden zu können. Damit ist gemäß der Erfindung sichergestellt, dass der Anschlussleiter der Auslöserichtung eines Airbags nicht im Weg steht.

An seinem distalen Ende kann der ebenfalls flexible Anschlussleiter ein optisches Kupplungselement aufweisen, das für den Anschluss an eine LED ausgebildet ist. Auch die LED kann somit außerhalb der Expansion des Airbags, im weiteren Bereich des Lenkradgehäuses, angeordnet werden. Die Verwendung eines lichtleitenden Kupplungselements rundet die Vorrichtung als eigenständige, vormontierte Einheit ab, die einfach montiert und ggfs. demontiert bzw. ausgetauscht werden kann.

Um eine homogene Lichtverteilung bzw. Ausleuchtung des Lichtleiters nach oben zur Silikonabdeckung zu realisieren, kann dessen Unterseite Mittel aufweisen, die ausgelegt sind, über eine Lichtbrechung, -reflektion und/oder -bündelung eine solche homogene, d.h. flächige Lichtauskopplung zu ermöglichen, wie beispielsweise ein bedrucktes Punktmuster oder eine mittels Laserabtrag eingebrachte Strukturierung, die beide vorab insbesondere in Abhängigkeit der Stelle der Lichteinkopplung durch den Anschlussleiter entsprechend berechnet und ausgestaltet werden.

Die nach oben abschließende Silikonabdeckung besteht vorzugsweise aus einem weißen, halbtransparenten Silikon, das materialbedingt in der Lage ist, sowohl auf der Vorder- als auch Rückseite mit bekannten Maßnahmen bedruckt, lackiert, metallisiert (hochglanz oder matt) und/oder mittels Laserbearbeitung strukturiert zu werden.

Auf diese Weise lassen sich alle möglichen Oberflächen, Dekorelemente, Beschriftungen, Embleme, Symbole und dergleichen realisieren, wobei über entsprechende Vertiefungen in der Oberfläche auch eine gewünschte Haptik umgesetzt werden kann. Die so in bzw. auf der Silikonabdeckung ausgestalteten Darstellungsformen können bereits ohne Hintergrundbeleuchtung sichtbar und bei Bedarf beleuchtbar oder sogar nur mit aktiver Hintergrundbeleuchtung ("Verschwindeeffekt") beleuchtbar sind.

Auch lässt sich durch eine entsprechende Strukturierung auf der Rückseite der Silikonabdeckung eine optische Tiefenwirkung (sogenannter "Crystal Look") erzielen. Der Dekorationsvielfalt und damit dem optischen Erscheinungsbild der Oberfläche der Vorrichtung sind somit keine Grenzen gesetzt. So lassen sich beispielsweise Embleme von Herstellern auf den mittigen Lenkradflächen, den dort angeordneten Airbagkappen, optional beleuchtbar und mit 3D-Effekt darstellen.

In einer weiteren Ausführungsform ist es auch denkbar, dass auf der Silikonabdeckung Tastelemente beispielsweise für die an sich bekannten Steuerelemente am Lenkrad (z.B. Lautstärkeregler, Telefontasten, Menüführungstasten usw.) angeordnet, vorzugsweise verklebt werden, die beispielsweise kapazitiv funktionieren.

In einem weiteren Aspekt betrifft die Erfindung ein Verfahren zur Herstellung eines flexiblen beleuchtbaren Anzeigeelements auf einem Trägerelement vorgeschlagen, wobei das Anzeigeelement aus einem Gehäuse mit einer Silikonabdeckung, mit einem Rahmen und mit einer Trägerplatte und aus einem in dem Gehäuse vollständig integrierten Lichtleiter besteht,
die Schritte aufweisend
- Ausbilden einer flexiblen Silikonabdeckung,
- Ausbilden eines Rahmens aus einem flexiblen Material,
- Ausbilden eines 2-Komponentenbauteils bestehend aus der Silikonabdeckung und dem Rahmen,
- Ausbilden einer Trägerplatte aus einem flexiblen Material,
- Ausbilden eines flexiblen Lichtleiters integral mit einem Anschlussleiter,
- Anordnen des Lichtleiters zwischen der Silikonabdeckung und der Trägerplatte, wobei der Anschlussleiter durch die Trägerplatte geführt wird,
- Ausbilden einer festen Verbindung zwischen dem Rahmen des 2-Komponentenbauteils und der Trägerplatte mittels Stoffschluss, und
- Ausbilden einer festen Verbindung zwischen der Trägerplatte und dem Trägerelement mittels Stoffschluss.

Die Silikonabdeckung kann aus einem Flüssigsilikon oder aus einem hochtemperaturvernetzbaren festen Silikonkautschuk hergestellt werden.

Bei der Verwendung von Flüssigsilikon werden die flüssigen 2-Komponenten-Silikonkautschuke mit Hilfe von bekannten Mehrkomponenten-Dosier- und Mischanlagen aus den Originalgebinden im gleichen Verhältnis in die beheizten Formen eines Spritzgießautomaten eingespritzt, wo der so additionsvernetzte Silikonkautschuk dann bei 140° bis 200°C innerhalb weniger Sekunden vulkanisiert.

Bei Verwendung von festem Silikonkautschuk als Basis werden Vernetzungsmittel und Additive mittels bekannter Walzwerke eingemischt und definierte, dosierte Mengen des so hochvernetzten Silikonkautschuks in Formwerkzeuge eingelegt und unter einem bestimmten Druck und in einer bestimmten Zeit bei Temperaturen ebenfalls zwischen 140° und 200°C ausgehärtet.

In beiden Fällen wird eine flexible Abdeckung als Oberteil für die Vorrichtung erhalten.

Wie bereits erwähnt wird der Lichtleiter zusammen mit dem Anschlusselement aus einem hochtransparenten Flüssigsilikon in einem Bauteil hergestellt.

Die Trägerplatte wird aus dem gleichen Material wie der Rahmen des 2-Komponentenbauteils ausgebildet, nämlich vorzugsweise aus TPO oder TPE, die in bekannter Weise in handelsüblichen Spritzgussmaschinen als 1-Komponenten- oder 2-Komponentenmaterialien verarbeitet werden. Dadurch wird es gemäß der Erfindung möglich, den Rahmen mit der Trägerplatte zu verschweißen, heißzuverstemmen oder zu verkleben.

Ebenso wird die Trägerplatte aus dem gleichen Material wie das Trägerelement ausgebildet und mit diesem verschweißt oder verklebt.

Das Verfahren gemäß der Erfindung kann vor finaler Herstellung der Vorrichtung noch die weiteren Schritte aufweisen, bei denen die Trägerplatte auf ihrer dem Lichtleiter zugewandten Seite mit einer reflektierenden Beschichtung versehen wird, bei denen die Silikonabdeckung auf ihrer Vorder- und/oder Rückseite mit einer Lackierung, einer Metallisierung und/oder mittels einer Laserbearbeitung hergestellten Strukturierung versehen wird und/oder bei denen der Lichtleiter auf seiner Unterseite mit Mitteln für eine gleichmäßige Lichtverteilung versehen wird.

Die so als eigenständige Einheit realisierbare erfindungsgemäße Vorrichtung, die vorzugsweise als ein beleuchtbares Anzeigeelement auf einer Airbagkappe angeordnet werden soll, zeichnet sich durch ein geringes Gewicht und eine Temperaturbeständigkeit in einem Bereich von -40° bis 105° C aus. Diese ist wasser- und staubdicht und zeigt bei Beschädigung, sprich Auslösung eines Airbags, keine Splittergefahr.

Die direkte stoffschlüssige Verbindung zwischen der Trägerplatte und einem beliebigen Trägerelement aus einem gleichen Material realisiert auf einfache Weise eine verliersichere Verbindung.

Die Oberfläche der Vorrichtung ist mittels der oben erwähnten Maßnahmen frei gestaltbar; es lassen sich Symbole, Embleme und dergleichen sichtbar oder erst mittels aktivierter Beleuchtung darstellen.

Weitere Vorteile und Merkmale der erfindungsgemäßen Vorrichtung ergeben sich aus der Beschreibung der anhand der beiliegenden Zeichnungen dargestellten Ausführungsbeispiele. Es zeigen
- Fig. 1: einen Querschnitt durch eine Vorrichtung gemäß der Erfindung in einer ersten Ausführungsform;
- Fig. 2a: eine Explosionsdarstellung durch die erste Ausführungsform von oben;
- Fig. 2b: eine Explosionsdarstellung durch die erste Ausführungsform von unten;
- Fig. 3: einen Querschnitt durch eine Vorrichtung gemäß der Erfindung in einer zweiten Ausführungsform;
- Fig. 4a: eine Explosionsdarstellung durch die zweite Ausführungsform von oben;
- Fig. 4b: eine Explosionsdarstellung durch die zweite Ausführungsform von unten;
- Fig. 5: einen Querschnitt durch eine Vorrichtung gemäß der Erfindung in einer dritten Ausführungsform;
- Fig. 6a: eine Explosionsdarstellung durch die dritte Ausführungsform von oben;
- Fig. 6b: eine Explosionsdarstellung durch die dritte Ausführungsform von unten;
- Fig. 7: einen Querschnitt durch eine Vorrichtung gemäß der Erfindung in einer vierten Ausführungsform;
- Fig. 8a: eine Explosionsdarstellung durch die vierte Ausführungsform von oben; und
- Fig. 8b: eine Explosionsdarstellung durch die vierte Ausführungsform von unten.

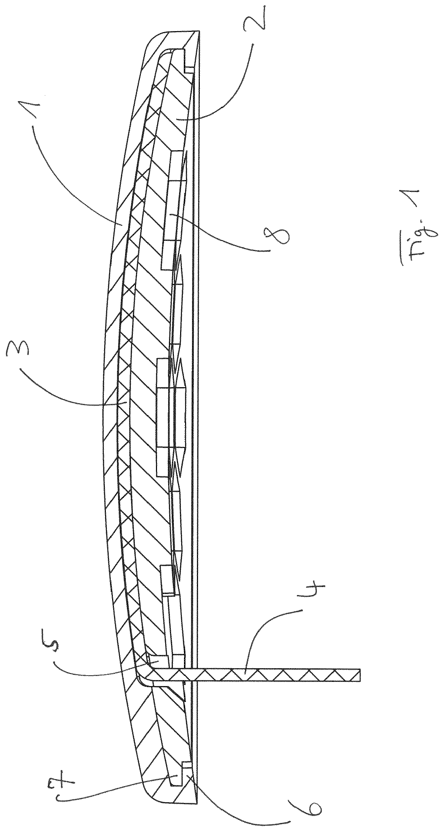

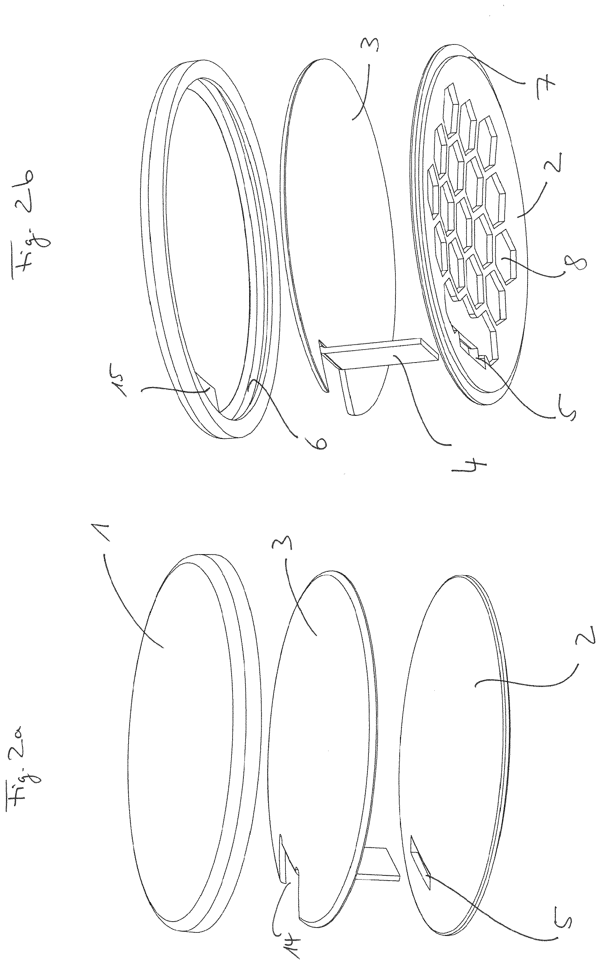

Die Figuren 1, 2a und 2b zeigen eine erste Ausführungsform der erfindungsgemäßen Vorrichtung.

Diese ist im gezeigten Beispiel kreisförmig und leicht nach außen bzw. oben gewölbt, kann im Prinzip jedoch jede beliebige Gestalt und Form aufweisen.

Die Vorrichtung besteht aus einer oberen flexiblen Silikonabdeckung 1 und einer unteren flexiblen Trägerplatte 2.

Die Trägerplatte 2 ist aus dem gleichen Material wie ein hier nicht gezeigtes Trägerelement, bspw. eine Airbagkappe, hergestellt, vorzugsweise aus einem TPO, und kann dadurch mit dem Trägerelement eine stoffschlüssige Verbindung eingehen, womit die gesamte Vorrichtung auf dem Trägerelement verliersicher befestigt wird.

Zwischen der Silikonabdeckung 1 und der Trägerplatte 2 liegt ein flächiger Lichtleiter 3 lose ein, d.h. es besteht zwischen dem Lichtleiter 3 und diesen beiden Komponenten keine direkte, stoffschlüssige Verbindung.

Der Lichtleiter 3, der aus einem hochtransparenten Flüssigsilikon hergestellt wird, weist integral einen flexiblen Anschlussleiter 4 auf, der seitlich am Rand, also bezogen auf die gesamte Vorrichtung dezentral angeordnet ist und durch eine entsprechende Öffnung 5 in der Trägerplatte 2 nach unten bzw. nach außen zu der Vorrichtung zu einer extern angeordneten, hier nicht gezeigten Lichtquelle, geführt wird. Hierzu kann der Anschlussleiter 4 an seinem distalen Ende ein Lichtkupplungselement für den Anschluss eines LED aufweisen.

In der gezeigten Ausführungsform wird die Vorrichtung vervollständigt, indem ein mit Hinterschnitt versehener Rand 6 der Silikonabdeckung 1 einen nach unten weisenden, nach oben zurückversetzten Ring 7 der Trägerplatte 2 umlaufend umgreift, so dass bei der Ausbildung eines Stoffschlusses zwischen der Trägerplatte 2 und dem Trägerelement dieser Rand 6 dort gegenüber dem Trägerelement dicht verpresst wird.

Der flächige, kreisförmige Lichtleiter 3 ist dabei vollständig staub- und wasserdicht zwischen der Silikonabdeckung 1 und der Trägerplatte 2 aufgenommen.

Die Trägerplatte 2 weist an ihrer Unterseite des Weiteren eine Vielzahl von Ausnehmungen 8 auf, die neben einer Materialeinsparung und dadurch Gewichtsreduzierung auch Aufnahmen für Klebemittel zur Ausbildung einer Klebeverbindung zwischen der Trägerplatte 2 und dem Trägerelement bilden.

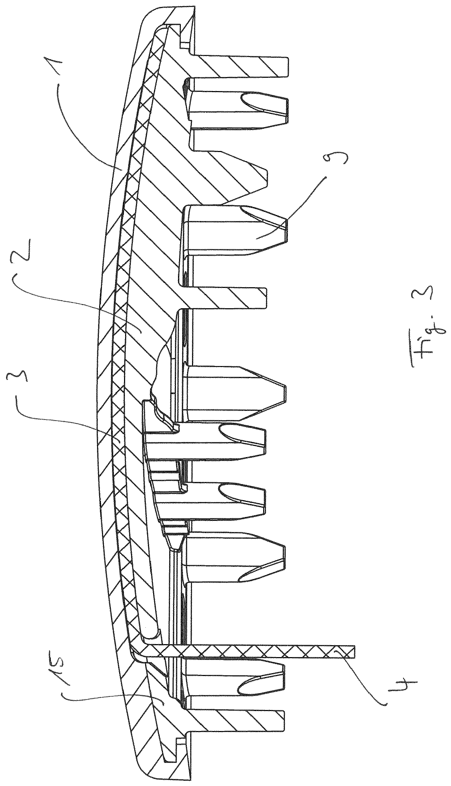

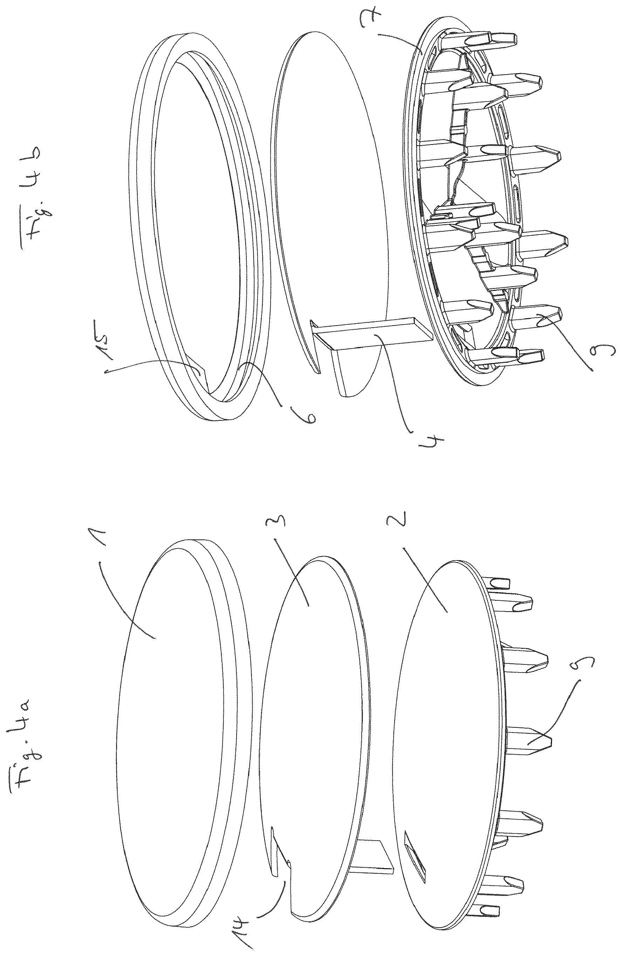

In den Figuren 3, 4a und 4b ist eine zweite Ausführungsform der erfindungsgemäßen Vorrichtung gezeigt, bei der die Bauteile im Wesentlichen identisch zu der ersten Ausführungsform sind, mit der Ausnahme, dass die Trägerplatte 2 eine Reihe von nach unten abragenden Verbindungselementen 9 aufweist.

Diese Verbindungselemente 9 können mit entsprechenden, vorzugsweise formkomplementären Ausnehmungen bzw. Aufnahmen in dem Trägerelement eine form- und/oder kraftschlüssige Verbindung eingehen, oder auch als Mittel für eine Klebe- oder Schweißverbindung mit entsprechenden Elementen im Trägerelement dienen.

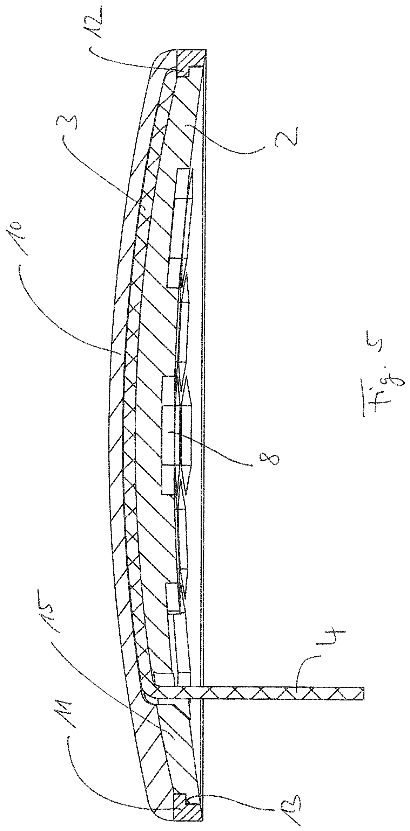

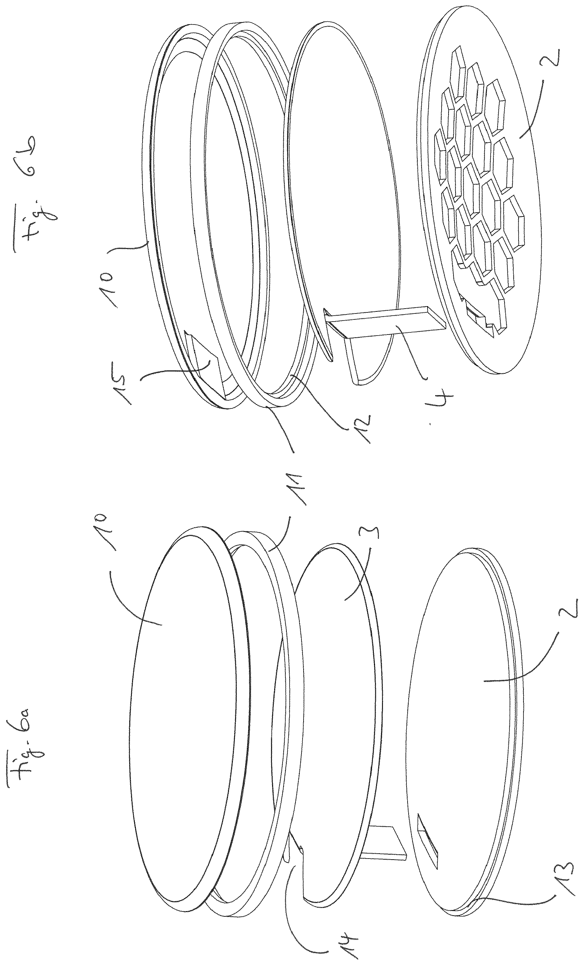

Die Figuren 5, 6a und 6b zeigen eine Vorrichtung gemäß der Erfindung in einer dritten Ausführungsform.

Diese Vorrichtung weist ebenso einen Lichtleiter 3 und eine Trägerplatte 2 auf.

Das Gehäuse wird darüber hinaus aber durch eine obere Silikonabdeckung 10 und einen umlaufenden, ringförmigen Rahmen 11 gebildet, wobei zwischen diesen Komponenten eine 2-Komponentenverbindung ausgebildet wird.

Der Rahmen 11 besteht aus dem gleichen Material wie die Trägerplatte 2, vorzugsweise aus einem TPO, und wird mit dieser verklebt, heißverstemmt oder verschweißt.

Dabei weist der Rahmen 11 einen umlaufenden Kragen 12 auf, der auf einem nach oben zeigenden Ring 13 der Trägerplatte 2 aufliegt.

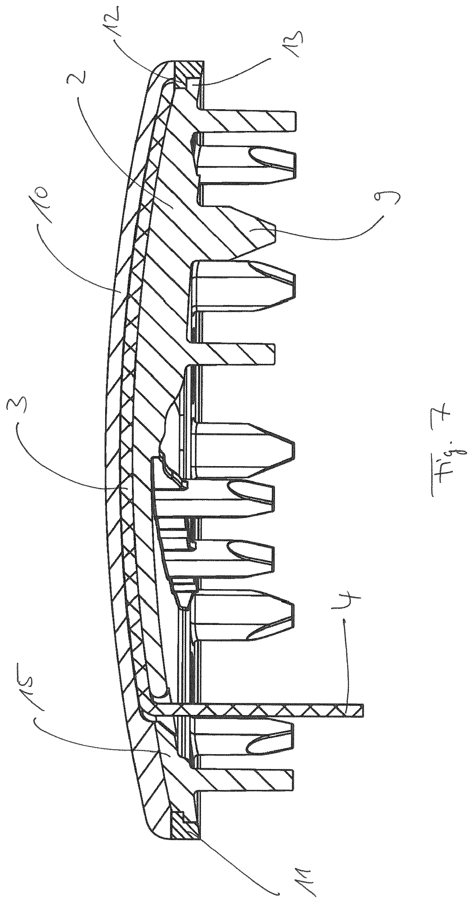

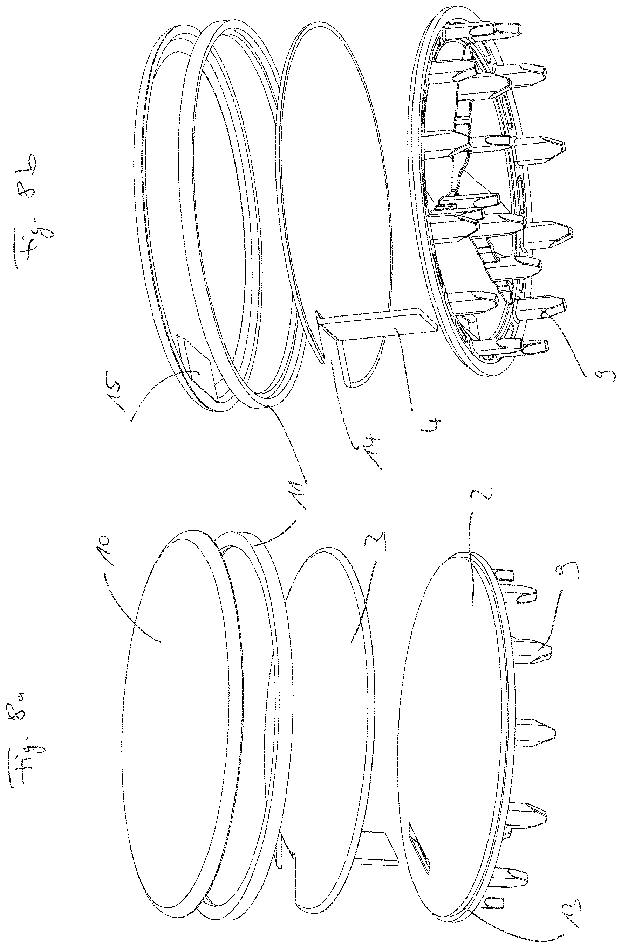

In den Figuren 7, 8a und 8b ist eine Ausführungsform der Vorrichtung mit einem Gehäuseaufbau mit einem Rahmen 11 gezeigt, wobei die Trägerplatte 2 entsprechende Verbindungselemente 9, wie vorhergehend beschrieben, aufweist.

Um einen kompakten Aufbau zu erzielen und um den Lichtleiter 3 zusätzlich radial zu fixieren, ist es vorgesehen, dass in allen beschriebenen Ausführungsformen ein durch den abragenden Anschlussleiter 4 im flächigen Lichtleiter 3 verbleibender Freiraum 14 durch eine formkomplementäre Verdickung 15 an der Unterseite der Silikonabdeckung 1, 10 ausgefüllt wird.

## Patentansprüche

1. Vorrichtung zur Anordnung an einem Trägerelement, bestehend aus einem flexiblen Gehäuse und einem in dem Gehäuse integrierten flexiblen Lichtleiter (3),
wobei das Gehäuse eine Abdeckung (1,10) und eine Trägerplatte (2) aufweist,
und wobei der Lichtleiter (3) durch die Abdeckung (1,10) und die Trägerplatte (2) vollständig eingefasst ist,
**dadurch gekennzeichnet, dass**
die Abdeckung als eine Silikonabdeckung (1,10) hergestellt ist, und
die Trägerplatte (2) aus dem gleichen Material wie das Trägerelement hergestellt ist, wobei das Material ausgelegt ist, um zwischen dem Trägerelement und der Trägerplatte (2) einen Stoffschluss auszubilden,
wobei das Gehäuse des Weiteren einen Rahmen (11) aus einem flexiblen Material aufweist, der mit der Silikonabdeckung (10) als ein 2-Komponentenbauteil hergestellt ist.

2. Vorrichtung nach Anspruch 1, bei der die Trägerplatte (2) mit dem Trägerelement verschweißt oder verklebt ist, und/oder bei der die Trägerplatte (2) integral eine Vielzahl von abragenden Verbindungselementen (9) aufweist, die ausgebildet sind, mit dem Trägerelement einen Form- und/oder Kraftschluss einzugehen.

3. Vorrichtung nach Anspruch 1, bei der der Rahmen (11) aus dem gleichen Material wie die Trägerplatte (2) hergestellt ist, wobei das Material ausgelegt ist, um zwischen dem Rahmen (11) und der Trägerplatte (2) einen Stoffschluss auszubilden, insbesondere bei der der Rahmen (11) mit der Trägerplatte (2) verschweißt, heißverstemmt oder verklebt ist.

4. Vorrichtung nach einem der Ansprüche 1 bis 3, bei der die Trägerplatte (2) aus einem thermoplastischen Poly-Olefin oder einem thermoplastischen Elastomer hergestellt ist.

5. Vorrichtung nach einem der Ansprüche 1 bis 4, bei der die dem Lichtleiter (3) zugewandte Seite der Trägerplatte (2) eine reflektierende Beschichtung aufweist.

6. Vorrichtung nach einem der Ansprüche 1 bis 5, bei der der Lichtleiter (3) integral mit einem Anschlussleiter (4) aus einem hochtransparenten Flüssigsilikon hergestellt ist.

7. Vorrichtung nach einem der Ansprüche 1 bis 6, bei der die Silikonabdeckung (1,10) auf ihrer Vorder- und/oder Rückseite lackiert, metallisiert und/oder mittels Laserbearbeitung strukturiert ist.

8. Vorrichtung nach einem der Ansprüche 1 bis 7, bei der auf der Silikonabdeckung (1,10) Tastelemente angeordnet sind.

9. Vorrichtung nach einem der Ansprüche 1 bis 8, bei der der Lichtleiter (3) auf seiner Unterseite Mittel für eine gleichmäßige Lichtauskopplung aufweist.

10. Vorrichtung nach einem der Ansprüche 1 bis 9, bei der der Lichtleiter (3) zwischen der Silikonabdeckung (1,10) und der Trägerplatte (2) lose einliegt.

11. Vorrichtung nach einem der Ansprüche 1 bis 10, bei der diese als vormontierte Einheit an dem Trägerelement befestigbar ist.

12. Verwendung einer Vorrichtung nach zumindest einem der Ansprüche 1 bis 11 als beleuchtbares Anzeigeelement für eine Airbagkappe einer Airbageinrichtung für ein Fahrzeug.

13. Verfahren zur Herstellung eines flexiblen beleuchtbaren Anzeigeelements auf einem Trägerelement, wobei das Anzeigeelement aus einem Gehäuse mit einer Silikonabdeckung (10), mit einem Rahmen (11) und mit einer Trägerplatte (2) und aus einem in dem Gehäuse vollständig integrierten Lichtleiter (3) besteht,
die Schritte aufweisend
- Ausbilden einer flexiblen Silikonabdeckung (10),
- Ausbilden eines Rahmens (11) aus einem flexiblen Material,
- Ausbilden eines 2-Komponentenbauteils bestehend aus der Silikonabdeckung (10) und dem Rahmen (11),
- Ausbilden einer Trägerplatte (2) aus einem flexiblen Material,
- Ausbilden eines flexiblen Lichtleiters (3) integral mit einem Anschlussleiter (4),
- Anordnen des Lichtleiters (3) zwischen der Silikonabdeckung (10) und der Trägerplatte (2), wobei der Anschlussleiter (4) durch die Trägerplatte (4) geführt wird,
- Ausbilden einer festen Verbindung zwischen dem Rahmen (11) des 2-Komponentenbauteils und der Trägerplatte (2) mittels Stoffschluss, und
- Ausbilden einer festen Verbindung zwischen der Trägerplatte (2) und dem Trägerelement mittels Stoffschluss.

14. Verfahren nach Anspruch 14, bei dem die Trägerplatte (2) aus dem gleichen Material wie der Rahmen (11) des 2-Komponentenbauteils ausgebildet und mit diesem verschweißt, heißverstemmt oder verklebt wird, und/oder bei dem die Trägerplatte (2) aus dem gleichen Material wie das Trägerelement ausgebildet und mit diesem verschweißt oder verklebt wird.

15. Verfahren nach Anspruch 13 oder 14, bei dem die Trägerplatte (2) auf ihrer dem Lichtleiter (3) zugewandten Seite mit einer reflektierenden Beschichtung versehen wird, bei dem die Silikonabdeckung (1,10) auf ihrer Vorder- und/oder Rückseite mit einer Lackierung, einer Metallisierung und/oder mittels einer Laserbearbeitung hergestellten Strukturierung versehen wird und/oder bei dem der Lichtleiter (3) auf seiner Unterseite mit Mitteln für eine gleichmäßige Lichtauskopplung versehen wird.
